# EUROPEAN PATENT SPECIFICATION

(11) **EP 0 849 832 B1**
(45) Date of publication and mention of the grant of the patent: **16.10.2002**
(21) Application number: 97850169.0
(22) Date of filing: 05.12.1997
(51) Int. Cl.: H01R 13/447

(54) **Electrical connector with a hinge**
Elektrischer Verbinder mit Scharnier
Connecteur électrique avec charnière

(30) Priority: 18.12.1996 SE 9604650
(43) Date of publication of application: 24.06.1998
(73) Proprietor: Eljo AB, 269 81 Bastad (SE)
(72) Inventor: Gunnarsson, Tomas, 312 03 Bastad (SE)
(74) Representative: Larsson, Sten

(56) References cited:
- DE-A- 3 143 960
- DE-A- 3 530 852
- DE-A- 4 430 519
- US-A- 4 134 516
- US-A- 5 030 120
- US-A- 5 571 023

## Description

The invention concerns an electrical connector having a housing comprising a bottom part and a self-closing cover.

Electrical connectors classified higher than normal standard , must be provided with some sort of protection against penetrating water and dust in order to fullfil the requirements. For that purpose they are often provided with a self-closing cover over bottom part openings.

Normally the cover is self-closing by help of some sort of spring means attached to the hinge between the cover and the bottom part. A great number of different solutions are known.

DE 3143960 A discloses a connector housing provided with a spring at one of the hinges, said spring being stretched when the cover is opened.

Another solution is disclosed in DE 4430519 A, where two spring means, perpendicular to the turning axis, are providing the closing function.

The above mentioned solutions have in common that they contain a great number of details which complicate the mounting process. It is therefore very difficult to obtain any form of automatization.

A somewhat simpler solution is disclosed in DE 3530852 A, according to the preamble of the claim, where the mounting process is facilitated by the use of a simple leaf spring between the two bearings which provides the closing force. The disadvantage with this solution is mainly that a leaf spring does not provide a force strong enough during a long turning movement.

According to the invention the problem to obtain a simple and easy-to-mount device for a self-closing cover where an even force is obtained during the entire turning movement, is solved by the combination of features of the charaterizing part of claim 1.

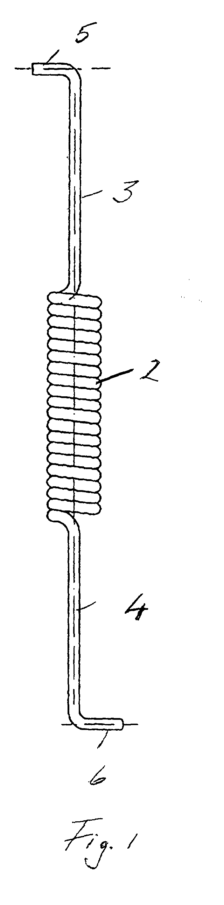

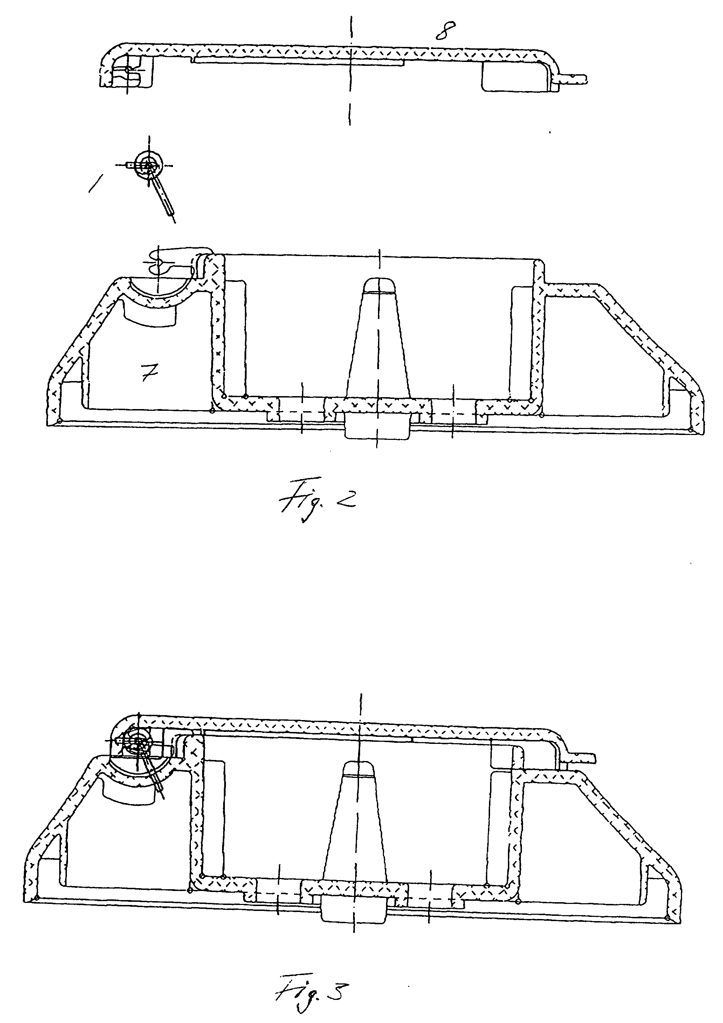

The invention is described more closely below with reference to the enclosed drawings. Fig 1 shows an enlarged view of a combined shaft/spring means used in the invention, Fig 2 shows a connector housing with a cover and shaft/spring means before mounting, while Fig 3 shows said parts mounted together.

In the drawings 1 stands for the shaft/spring means in general, 2 stands for its helical spring part 3 and 4 are shaft ends having deviations 5 and 6, 7 stands for the bottom part in a connector housing and 8 for a cover.

The turning axis between the terminal and the cover and the spring means is designed as one unit 1, which also obtains the closing function.

This unit 1 comprises a spring part in the form of a helical spring 2 and two shaft ends 3 and 4. Said ends being snapped into the bottom part as well as into the cover 8 thus eliminating the need for separate links. The deviations 5 and 6 prevent the shaft ends from being turned.

The mounting of the shaft/spring means is carried out in a very simple way by snapping it into the bottom part and the cover respectively. Said process being very suitable for automatic mounting.

The advantage when using the device according to the invention is, in addition to the simple mounting process, that the spring force may be varied by choosing different numbers of windings in the spring without the need for any other change of the construction.

## Claims

1. Electrical connector having a housing, comprising a bottom part (7) and a self-closing cover (8), which are linked to each other by a hinge comprising a one-piece shaft/spring means (1),
**characterized in that** the shaft/spring means (1) comprises a spring part (2) and shaft ends (3) and (4) respectively, which are snapped into the bottom part (7) and the cover (8) respectively, said shaft ends being provided with deviated parts (5) and (6) respectively, which prevent turning of the deviated parts (5) and (6) of the shaft/spring means (1) relative to the bottom (7) and the cover (8) respectively.

2. Electrical connector according to claim 1, **characterized in that** the spring part (2) is a helical spring.

## Patentansprüche

1. Elektrischer Verbinder mit einem Gehäuse, das ein Bodenteil (7) und eine selbst schließende Abdeckung (8) aufweist, die durch ein Gelenk mit einer einstückigen Schaft-/Federeinrichtung (1) miteinander verbunden sind,
**dadurch gekennzeichnet, dass** die Schaft-/Federeinrichtung (1) einen Federbereich (2) sowie Schaftenden (3) bzw. (4) aufweist, die in das Bodenteil (7) bzw. die Abdeckung (8) eingeschnappt werden, wobei die Schaftenden mit abgewinkelten Bereichen (5) bzw. (6) versehen sind, die ein Drehen der abgewinkelten Bereiche (5) und (6) der Schaft-/Federeinrichtung (1) relativ zu dem Bodenteil (7) bzw. der Abdeckung (8) verhindem.

2. Elektrischer Verbinder nach Anspruch 1,
**dadurch gekennzeichnet, dass** der Federbereich (2) eine Schraubenfeder ist.

## Revendications

1. Connecteur électrique ayant un boîtier, comprenant une partie inférieure (7) et un couvercle auto-fermant (8), qui sont raccordés l'un à l'autre par une charnière comprenant un moyen (1) d'une pièce formant arbre et ressort,
**caractérisé en ce que** le moyen (1) formant arbre et ressort comprend une partie (2) formant ressort et des extrémités d'arbre respectivement (3) et (4), qui sont fixées respectivement à la partie inférieure (7) et au couvercle (8), lesdites extrémités de l'arbre étant équipées respectivement de parties (5) et (6) déformées, qui empêchent la rotation des parties (5) et (6) déformées du moyen (1) formant arbre et ressort par rapport respectivement à la partie inférieure (7) et au couvercle (8).

2. Connecteur électrique selon la revendication 1, **caractérisé en ce que** la partie (2) formant ressort est un ressort hélicoïdal.
